# EUROPEAN PATENT APPLICATION

(11) **EP 4 730 317 A1**
(43) Date of publication of application: **22.04.2026**
(21) Application number: 24822308.3
(22) Date of filing: 13.03.2024
(51) Int. Cl.: G09G 3/34, G09G 3/20, G09G 3/36, G09G 3/3208, G09G 3/32, G02F 1/167, G02F 1/1343, G02F 1/1676

(54) **DISPLAY MODULE AND DISPLAY DEVICE**

(30) Priority: 16.06.2023 CN 202310717687
(71) Applicant: HKC Corporation Limited, Shenzhen, Guangdong 518101 (CN)
(72) Inventor: MAO, Han, Shenzhen, Guangdong 518101 (CN); YE, Lidan, Shenzhen, Guangdong 518101 (CN)
(74) Representative: Wörz, Volker Alfred
(86) International application number: PCT/CN2024/081491
(87) International publication number: WO 2024/255350

(57) **Abstract**

A display module (100) and a display device. The display module (100) comprises: pixel units (40), wherein each pixel unit (40) comprises a pixel electrode (13), a common electrode (22), and microcapsule structures (30), the pixel electrode (13) and the common electrode (22) are arranged opposite to each other, and the microcapsule structures (30) are arranged between the pixel electrode (13) and the common electrode (22); a driving transistor (14), comprising a control end (141), a first end (142), and a second end (143), wherein the second end (143) is electrically connected to the pixel electrode (13); a scanning line (15) electrically connected to the control end (141); and a data line (16) electrically connected to the first end (142). Each pixel unit (40) comprises a first pixel unit (41) and a second pixel unit (42) adjacent to each other; within each display period (T), the first pixel unit (41) is used for receiving one frame of data signal pushed by the data line (16) in a first stage (T1), and the second pixel unit (42) is used for receiving the next frame of data signal pushed by the data line (16) in a second stage (T2); and the first stage (T1) precedes the second stage (T2). The display module (100) can effectively improve the refresh rate and mitigate picture stuttering.

## Description

### CROSS-REFERENCE TO RELATED APPLICATIONS

The present application claims priority of Chinese Patent Application No. 202310717687.X, filed on June 16, 2023, the entire contents of which are hereby incorporated by reference in their entirety.

### TECHNICAL FIELD

The present disclosure relates to the field of display technologies, and in particular to a display module and a display device.

### BACKGROUND

With the evolution of the display industry, escalating demands have emerged for superior visual performance across display panels. Among these innovations, E-Ink display panels, characterized by their distinctive reflective imaging technology, have gradually gained prominence, progressively capturing a substantial share of the display market.

Conventionally, an e-ink display panel displays an image by means of electrophoretic movement of charged particles of different colors in the e-ink in an electric field formed between the upper and lower substrates. However, this electrophoretic mechanism inherently entails prolonged response times, typically around 400 milliseconds, which is significantly inferior to the performance of liquid crystal displays (LCDs). The resultant suboptimal refresh rate introduces perceptible latency during user interactions.

### SUMMARY OF THE DISCLOSURE

The present disclosure provides a display module and a display device, which are designed to solve the problem of the refresh rate of the display device in the related art being low, which would result in the screen stuttering.

To solve the above technical problem, the present disclosure provides a display module, including:
pixel units; wherein each pixel unit includes a pixel electrode, a common electrode, and a microcapsule structure; the pixel electrode is disposed opposite the common electrode, and the microcapsule structure is disposed between the pixel electrode and the common electrode; the microcapsule structure includes charged particles;
drive transistors; wherein each drive transistor includes a control end, a first end, and a second end; the second end is electrically connected to a corresponding pixel electrode for driving the corresponding pixel electrode;
scan lines; wherein each scan line is electrically connected to the control end of a corresponding drive transistor, for supplying a scanning signal to a corresponding pixel unit; and
data lines; wherein each data line is electrically connected to the first end of a corresponding drive transistor, for supplying a data signal to a corresponding pixel unit;
wherein each pixel unit includes a first pixel unit and a second pixel unit that are adjacent to each other;
within each display cycle:
   in a first phase, the first pixel unit is configured to receive the data signal corresponding to a frame pushed by a corresponding data line;
   in a second phase, the second pixel unit is configured to receive the data signal corresponding to a next frame pushed by a corresponding data line; the first phase is prior to the second phase.

In some embodiments, the pixel units are arranged in an array; within the display cycle:
in the first phase, the drive transistors, corresponding to the first pixel units of the pixel units in multiple rows, are turned on sequentially, and the first pixel units in the multiple rows are caused to receive the data signals corresponding to the frame pushed by corresponding data lines to display an image corresponding to the frame;
in the second phase, the drive transistors, corresponding to the second pixel units of the pixel units in the multiple rows, are turned on sequentially, and the second pixel units in the multiple rows are caused to receive the data signals corresponding to the next frame pushed by corresponding data lines to display another image corresponding to the next frame.

In some embodiments, for each pixel unit:
in the pixel unit, the pixel electrode includes a first pixel electrode and a second pixel electrode that are adjacent to each other; the first pixel electrode forms the first pixel unit with the common electrode and the microcapsule structure, and the second pixel electrode forms the second pixel unit with the same common electrode and the microcapsule structure;
the drive transistors include a first transistor and a second transistor corresponding to the pixel unit, the second end of the first transistor being electrically connected to the first pixel electrode, and the second end of the second transistor being electrically connected to the second pixel electrode.

In some embodiments, the first end of the first transistor and the first end of the second transistor are each electrically connected to a same corresponding data line;
the scan lines include a first scan line and a second scan line corresponding to the pixel unit, the first scan line being electrically connected to the control end of the first transistor, the second scan line being electrically connected to the control end of the second transistor;
within the display cycle:
   in the first phase, the first scan line is configured to push the scanning signal to the first transistor, and the first pixel unit is configured to receive the data signal corresponding to the frame pushed by the same corresponding data line;
   in the second phase, the second scan line is configured to push the scanning signal to the second transistor, and the second pixel unit is configured to receive the data signal corresponding to the next frame pushed by the same corresponding data line.

In some embodiments, within the display cycle:
in the first phase, the first scan lines corresponding to the pixel units are configured to push the scanning signals corresponding to the frame row by row, and the first transistors corresponding to the pixel units are caused to be turned on row by row; the data lines are configured to push the data signals corresponding to the frame to the first pixel units of the pixel units column by column, for displaying an image corresponding to the frame;
in the second phase, the second scan lines corresponding to the pixel units are configured to push the scanning signals corresponding to the next frame row by row, and the second transistors corresponding to the pixel units are caused to be turned on row by row; the data lines are configured to push the data signals corresponding to the next frame to the second pixel units of the pixel units column by column, for displaying another image corresponding to the next frame.

In some embodiments, after the first phase ends, the second phase is entered after a preset period of time.

In some embodiments, the control end of the first transistor and the control end of the second transistor are each electrically connected to a same corresponding scan line;
the data lines include a first data line and a second data line corresponding to the pixel unit, the first data line being electrically connected to the first end of the first transistor, and the second data line being electrically connected to the first end of the second transistor;
within the display cycle:
   in the first phase, the same corresponding scan line is configured to push the scanning signal to the first transistor, and the first data line is configured to push the data signal corresponding to the frame to the first pixel unit via the first transistor;
   in the second phase, the same corresponding scan line is configured to push the scanning signal to the second transistor, and the second data line is configured to push the data signal corresponding to the next frame to the second pixel unit via the second transistor.

In some embodiments, within the display cycle:
in the first phase, the scan lines are configured to push the scanning signals corresponding to the frame row by row, and the drive transistors are caused to be turned on row by row; the first data lines corresponding to the pixel units are configured to push the data signals corresponding to the frame to the first pixel units of the pixel units column by column, for displaying an image corresponding to the frame; after each of the first data lines has pushed for a period of time, a corresponding second data line is configured to push the data signal corresponding to the next frame to a corresponding second pixel unit in advance;
in the second phase, the scan lines are configured to push the scanning signals corresponding to the next frame row by row, and the second pixel units of the pixel units are configured to receive the data signals corresponding to the next frame, for displaying another image corresponding to the next frame.

In some embodiments, the scan lines include a first scan line and a second scan line corresponding to the pixel unit, the first scan line being electrically connected to the control end of the first transistor, the second scan line being electrically connected to the control end of the second transistor;
the data lines include a first data line and a second data line corresponding to the pixel unit, the first data line being electrically connected to the first end of the first transistor, and the second data line being electrically connected to the first end of the second transistor;
within the display cycle:
   in the first phase, the first scan line is configured to push the scanning signal to the first transistor, and the first data line is configured to push the data signal corresponding to the frame to the first pixel unit via the first transistor;
   in the second phase, the second scan line is configured to push the scanning signal to the second transistor, and the second data line is configured to push the data signal corresponding to the next frame to the second pixel unit via the second transistor.

In some embodiments, within the display cycle:
in the first phase, the first scan lines corresponding to the pixel units are configured to push the scanning signals corresponding to the frame row by row, and the first transistors corresponding to the pixel units are caused to be turned on row by row; the first data lines corresponding to the pixel units are configured to push the data signals corresponding to the frame to the first pixel units of the pixel units column by column, for displaying an image corresponding to the frame;
in the second phase, the second scan lines corresponding to the pixel units are configured to push the scanning signals corresponding to the next frame row by row, and the second transistors corresponding to the pixel units are caused to be turned on row by row; the second data lines corresponding to the pixel units are configured to push the data signals corresponding to the next frame to the second pixel units of the pixel units column by column, for displaying another image corresponding to the next frame.

In some embodiments, the common electrode includes a first common electrode and a second common electrode that are adjacent to each other; the pixel electrode forms the first pixel unit with the first common electrode and the microcapsule structure, and the pixel electrode forms the second pixel unit with the second common electrode and the microcapsule structure;
for each pixel unit, within the display cycle, a corresponding scan line is configured to push the scanning signal to the drive transistor in the first phase and the second phase;
in the first phase, a corresponding data line is configured to push the data signal corresponding to the frame to the pixel electrode via the first end, the first common electrode is configured to push a first common voltage signal, and the first pixel unit is caused to receive the data signal corresponding to the frame;
in the second phase, the corresponding data line is configured to push the data signal corresponding to the next frame to the pixel electrode via the first end, the second common electrode is configured to push a second common voltage signal, and the second pixel unit is caused to receive the data signal corresponding to the next frame.

In some embodiments, for the pixel units, within the display cycle, the scan lines are configured to push the scanning signals row by row, and the drive transistors are caused to be turned on row by row;
in the first phase, the first common electrodes of the pixel units are configured to push the common voltage signals corresponding to the frame; the data lines are configured to push the data signals corresponding to the frame to the pixel electrodes of the pixel units column by column, such that a corresponding electric field is formed in each of the first pixel units of the pixel units, for displaying an image corresponding to the frame;
after the data lines have pushed the data signals corresponding to the frame for a period of time, the second common electrodes of the pixel units are configured to push the common voltage signals corresponding to the next frame; after another period of time, the second phase is entered;
in the second phase, the data lines are configured to push the data signals corresponding to the next frame to the pixel electrodes of the pixel units column by column, such that a corresponding electric field is formed in each of the second pixel units of the pixel units, for displaying another image corresponding to the next frame.

In some embodiments, for each pixel unit:
in the pixel unit, the pixel electrode includes a first pixel electrode and a second pixel electrode that are adjacent to each other; the common electrode includes a first common electrode and a second common electrode that are adjacent to each other; the first pixel electrode is disposed facing the first common electrode and forms the first pixel unit together with the microcapsule structure; the second pixel electrode is disposed facing the second common electrode and forms the second pixel unit together with the microcapsule structure;
the drive transistors include a first transistor and a second transistor corresponding to the pixel unit, the second end of the first transistor being electrically connected to the first pixel electrode, and the second end of the second transistor being electrically connected to the second pixel electrode.

In some embodiments, the control end of the first transistor and the control end of the second transistor are each electrically connected to a same corresponding scan line;
the data lines include a first data line and a second data line corresponding to the pixel unit, the first data line being electrically connected to the first end of the first transistor, and the second data line being electrically connected to the first end of the second transistor;
within the display cycle, the same corresponding scan line is configured to push the scanning signal to the drive transistor in the first phase and the second phase;
in the first phase, the first data line is configured to push the data signal corresponding to the frame to the first pixel electrode via the first transistor, the first common electrode is configured to push a first common voltage signal, and the first pixel unit is caused to receive the data signal corresponding to the frame;
in the second phase, the second data line is configured to push the data signal corresponding to the next frame to the second pixel electrode via the second transistor, the second common electrode is configured to push a second common voltage signal, and the second pixel unit is caused to receive the data signal corresponding to the next frame.

In some embodiments, for the pixel units, within the display cycle, the scan lines are configured to push the scanning signals row by row, and the drive transistors are caused to be turned on row by row;
in the first phase, the first common electrodes of the pixel units are configured to push the first common voltage signals; the first data lines corresponding to the pixel units are configured to push the data signals corresponding to the frame to the first pixel units of the pixel units column by column, for displaying an image corresponding to the frame;
in the second phase, the second common electrodes of the pixel units are configured to push the second common voltage signals; the second data lines corresponding to the pixel units are configured to push the data signals corresponding to the next frame to the second pixel units of the pixel units column by column, for displaying another image corresponding to the next frame.

In some embodiments, the first end of the first transistor and the first end of the second transistor are each electrically connected to a same corresponding data line;
the scan lines include a first scan line and a second scan line corresponding to the pixel unit, the first scan line being electrically connected to the control end of the first transistor, the second scan line being electrically connected to the control end of the second transistor;
within the display cycle:
   in the first phase, the first scan line is configured to push the scanning signal to the first transistor, the same corresponding data line is configured to push the data signal corresponding to the frame to the first pixel electrode via the first transistor, the first common electrode is configured to push a first common voltage signal, and the first pixel unit is caused to receive the data signal corresponding to the frame;
   in the second phase, the second scan line is configured to push the data signal corresponding to the next frame to the second pixel electrode via the second transistor, the second common electrode is configured to push a second common voltage signal, and the second pixel unit is caused to receive the data signal corresponding to the next frame.

In some embodiments, for the pixel units, within the display cycle:
in the first phase, the first scan lines corresponding to the pixel units are configured to push the scanning signals corresponding to the frame row by row, and the first transistors corresponding to the pixel units are caused to be turned on row by row; the first common electrodes of the pixel units are configured to push the first common voltage signals; the data lines are configured to push the data signals corresponding to the frame to the first pixel units of the pixel units column by column, for displaying an image corresponding to the frame;
in the second phase, the second scan lines corresponding to the pixel units are configured to push the scanning signals corresponding to the next frame row by row, and the second transistors corresponding to the pixel units are caused to be turned on row by row; the second common electrodes of the pixel units are configured to push the second common voltage signals; the data lines are configured to push the data signals corresponding to the next frame to the second pixel units of the pixel units column by column, for displaying another image corresponding to the next frame.

In some embodiments, the microcapsule structure includes an electrophoresis medium, and positive-charged particles and negative-charged particles suspended in the electrophoresis medium; the positive-charged particles and the negative-charged particles are the charged particles of different colors.

To solve the above technical problem, the present disclosure further provides a display device, including:
the display module as above, for displaying images; and
a control module, electrically connected to the display module and configured to provide a control signal to the display module; wherein within the display cycle, the display module is caused to display an image corresponding to the frame in the first phase and display another image corresponding to the next frame in the second phase.

The beneficial effects of the present disclosure: Unlike the related art, the present disclosure provides a display module and a display device, the display module including pixel units, each pixel unit including a first pixel unit and a second pixel unit that are adjacent to each other, for displaying an image. By causing the first pixel unit to receive, in a first phase, a data signal corresponding to a frame pushed by a data line within each display cycle to display a frame of image, and causing the second pixel unit to receive, in a second phase, a data signal corresponding to a next frame pushed by the data line to display a next frame of image, the display module may display two frames of images in a display cycle, which may double the refresh rate of the display module, thereby overcoming the problem of a low refresh rate caused by the slow response speed of the display module, and thus effectively improving the refresh rate of the display module and mitigating the "stuck" feeling of the screen.

### BRIEF DESCRIPTION OF THE DRAWINGS

To more clearly illustrate the technical solution in the embodiments of the present disclosure, the following provides a brief description of the drawings needed for use in the description of the embodiments. Obviously, the drawings described below are only some embodiments of the present disclosure. For those skilled in the art, without having to pay for any creative effort, other drawings may be obtained based on these drawings.
FIG. 1 is a structural schematic view of a drive substrate of a display module in the related art.
FIG. 2a is a structural schematic view of a pixel unit as shown in FIG. 1 when no electric field is applied.
FIG. 2b is a structural schematic view of the pixel unit as shown in FIG. 1 when displaying black.
FIG. 2c is a structural schematic view of the pixel unit as shown in FIG. 1 when displaying white.
FIG. 3 is a structural schematic view of a display module according to Implementation 1 of the present disclosure.
FIG. 4 is a structural schematic view of a drive substrate according to Implementation 1 of the present disclosure.
FIG. 5 is another structural schematic view of a drive substrate according to Implementation 1 of the present disclosure.
FIG. 6 is a timing diagram of a drive signal of a display module according to Implementation 1 of the present disclosure.
FIG. 7 is a structural schematic view of a display module according to Implementation 2 of the present disclosure.
FIG. 8 is a structural schematic view of a drive substrate according to Implementation 2 of the present disclosure.
FIG. 9 is another structural schematic view of a drive substrate according to Implementation 2 of the present disclosure.
FIG. 10 is a timing diagram of a drive signal of a display module according to Implementation 2 of the present disclosure.
FIG. 11 is a structural schematic view of a display module according to Implementation 3 of the present disclosure.
FIG. 12 is a structural schematic view of a drive substrate according to Implementation 3 of the present disclosure.
FIG. 13 is a timing diagram of a drive signal of a display module according to Implementation 3 of the present disclosure.
FIG. 14 is a planar structural schematic view of a display module according to Implementation 4 of the present disclosure.
FIG. 15 is another planar structural schematic view of a display module according to Implementation 4 of the present disclosure.
FIG. 16 is a timing diagram of a drive signal of a display module according to Implementation 4 of the present disclosure.
FIG. 17 is a planar structural schematic view of a display module according to Implementation 5 of the present disclosure.
FIG. 18 is a timing diagram of a drive signal of a display module according to Implementation 5 of the present disclosure.
FIG. 19 is a planar structural schematic view of a display module according to some embodiments of the present disclosure.
FIG. 20 is a timing diagram of a drive signal of a display module according to some embodiments of the present disclosure.
FIG. 21 is a structural schematic view of a display device according to some embodiments of the present disclosure.

### Reference numerals:

100a, 100-display module; 10a, 10-drive substrate; 11a, 11-base substrate; 12a, 12-drive circuit layer; 13a, 13-pixel electrode; 131-first pixel electrode; 132-second pixel electrode; 14a, 14-drive transistor; 141a, 141-control end; 142a, 142-first end; 143a, 143-second end; 144-first transistor; 145-second transistor; 15a, 15-scan line; 151-first scan line; 152-second scan line; 16a, 16-data line; 161-first data line; 162-second data line; 20a, 20-opposing substrate; 21a, 21-substrate; 22a, 22-common electrode; 221-first common electrode; 222-second common electrode; 30a, 30-microcapsule structure; 31a, 31-positive-charged particle; 32a, 32-negative-charged particle; 40a, 40-pixel unit; 41-first pixel unit; 42-second pixel unit; 200-control module; T-display cycle; T1-first phase; T2-second phase; X-first direction; Y-second direction.

### DETAILED DESCRIPTION

The following will clearly and completely describe the technical solutions in the embodiments of the present disclosure in combination with the accompanying drawings. Obviously, the embodiments described are only some embodiments of the present disclosure, not all of them. Based on the embodiments in the present disclosure, all other embodiments obtained by those skilled in the art without creative effort are within the scope of the present disclosure.

The terms "first," "second," and "third" in the present disclosure are used for descriptive purposes only and are not to be understood as indicating or implying relative importance or as implying a specified number of technical features. Thus, features that are defined with "first," "second," or "third" may expressly or implicitly include at least one such feature. In the description of the present disclosure, the meaning of "multiple" is at least two, such as two, three, etc., unless otherwise expressly and specifically limited. All directional indications (such as up, down, left, right, front, back, etc.) in the embodiments of the present disclosure are only intended to explain a relative positional relationship, movement, etc. between parts in a particular attitude (as shown in the accompanying drawings). When this attitude changes, the directional indication will also change accordingly. In addition, the terms "including" and "having" and any variations of these terms are intended to cover non-exclusive inclusion. For example, a process, method, system, product, or device that includes a series of steps or units is not limited to the listed steps or units, but may optionally further include unlisted steps or units, or may optionally further include other steps or units that are inherent to the process, method, product, or device.

References in this document to "embodiments" mean that features, structures or properties combined in the description of an embodiment may be included in at least one embodiment of the present disclosure. The occurrence of the phrase in various places in the description does not necessarily refer to the same embodiment, nor is it mutually exclusive with other embodiments or independent or alternative embodiments. It is expressly and implicitly understood by those skilled in the art that the embodiments described herein may be combined with other embodiments.

The present disclosure is described in detail below in conjunction with the accompanying drawings and examples.

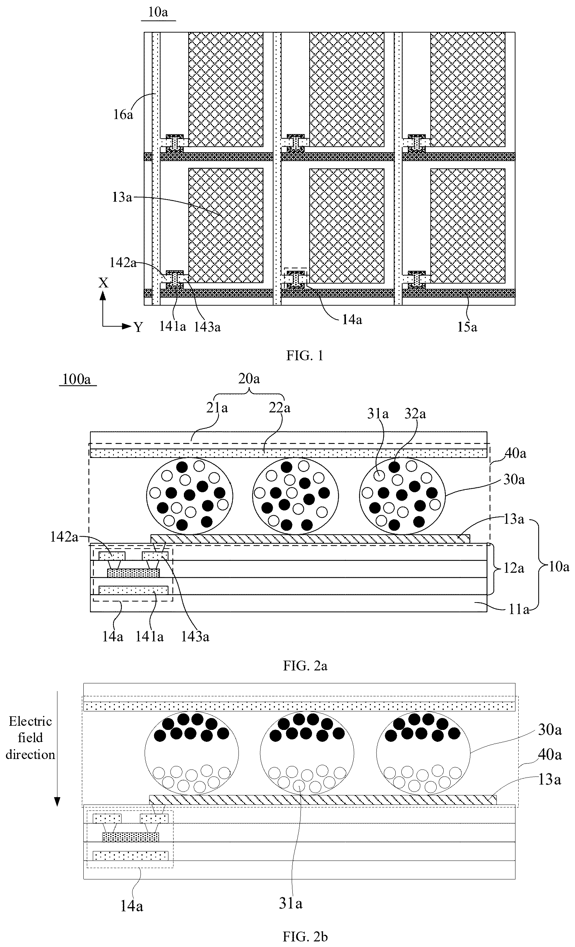

Referring to FIGS. 1 and 2a, where FIG. 1 is a structural schematic view of a drive substrate of a display module in the related art, and FIG. 2a is a structural schematic view of a pixel unit as shown in FIG. 1 when no electric field is applied. In the related art, an electrophoretic display module 100a includes a drive substrate 10a and an opposing substrate 20a, and a microcapsule structure 30a disposed between the drive substrate 10a and the opposing substrate 20a; where the drive substrate 10a includes a base substrate 11a, a drive circuit layer 12a, and an electrode layer, the electrode layer including multiple pixel electrodes 13a distributed in an array; the opposing substrate 20a includes multiple common electrodes 22a, where the pixel electrodes 13a and the common electrodes 22a arranged opposite each other and form, together with the microcapsule structure 30a that is arranged between the pixel electrodes 13a and the common electrodes 22a, a pixel unit 40a. Specifically, the drive circuit layer 12a includes multiple scan lines 15 extending in a first direction X, multiple data lines 16a extending in a second direction Y, and multiple drive transistors 14a; the drive transistors 14a correspond to the pixel units 40a in a one-to-one correspondence; each scan line 15 is electrically connected to a control end 141a of each of the drive transistors 14a in a corresponding row; each data line 16a is electrically connected to a first end 142a of each of the drive transistors 14a in a corresponding column; a second end 143a of each drive transistor 14a is electrically connected to a corresponding pixel electrode 13a. The first direction X intersects the second direction Y, and in the embodiments of the present disclosure, the first direction X is perpendicular to the second direction Y for illustration.

As shown in FIG. 2a, the microcapsule structure 30a disposed between the pixel electrode 13a and the common electrode 22a includes white positive-charged particles 31a and black negative-charged particles 32a. When no potential is applied to the pixel electrode 13a and the common electrode 22a, the positive-charged particles 31a and the negative-charged particles 32a are randomly distributed in the microcapsule structure 30a, and no image is displayed.

Referring to FIG. 2b, FIG. 2b is a structural schematic view of the pixel unit as shown in FIG. 1 when displaying black, when a negative potential is applied to the pixel electrode 13a and a positive potential is applied to the common electrode 22a, i.e., the potential of the common electrode 22a is higher than the potential of the pixel electrode 13a, forming an electric field in a direction from the common electrode 22a to the pixel electrode 13a, and thus the positive-charged particles 31a move towards the pixel electrode 13a in an "electrophoresis" manner while the negative-charged particles 32a move towards the common electrode 22a. In this case, the pixel unit 40a displays black.

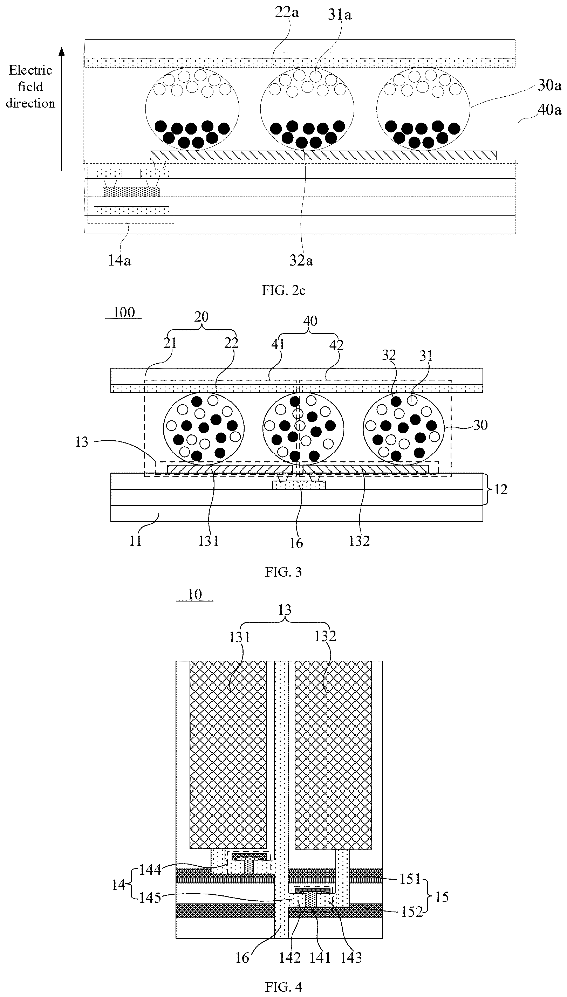

Referring to FIG. 2c, FIG. 2c is a structural schematic view of the pixel unit as shown in FIG. 1 when displaying white, when a positive potential is applied to the pixel electrode 13a and a negative potential is applied to the common electrode 22a, i.e. the potential of the pixel electrode 13a is higher than the potential of the common electrode 22a, forming an electric field in a direction from the pixel electrode 13a to the common electrode 22a, and thus the negative electric particles 32a move towards the pixel electrode 13a in an "electrophoresis" manner while the positive electric particles 31a move towards the common electrode 22a. In this case, the pixel unit 40a displays white.

In the above display mode, the positive-charged particle 31a and the negative-charged particle 32a move in an "electrophoresis" manner. Therefore, their response speed is generally above 500 ms, making the refresh rate of the display module 100a less than 10 Hz, i.e., the dynamic display effect is poor, and it is prone to a sense of "stuck" on the screen.

The display module 100 provided in the embodiments of the present disclosure (referring to FIG. 3) includes a first pixel unit 41 and a second pixel unit 42 adjacent to each other for displaying images; and, within each display cycle T, the first pixel unit 41 is configured to receive a data signal corresponding to a frame pushed by the data line 16 in a first phase T1, to display the frame of image, and the second pixel unit 42 is configured to receive a data signal corresponding to a next frame pushed by the data line 16 in a second phase T2, to display the next frame of image, such that the display module 100 can display two frames of image within one display cycle T, which may double the refresh rate of the display module 100, thereby overcoming the aforementioned problem of a low refresh rate caused by the slow response speed of the display module 100a, and thus effectively improving the refresh rate of the display module 100a and mitigating the "stuck" feeling of the images.

The following description of the present disclosure is illustrated in detail in combination with the accompanying drawings and embodiments.

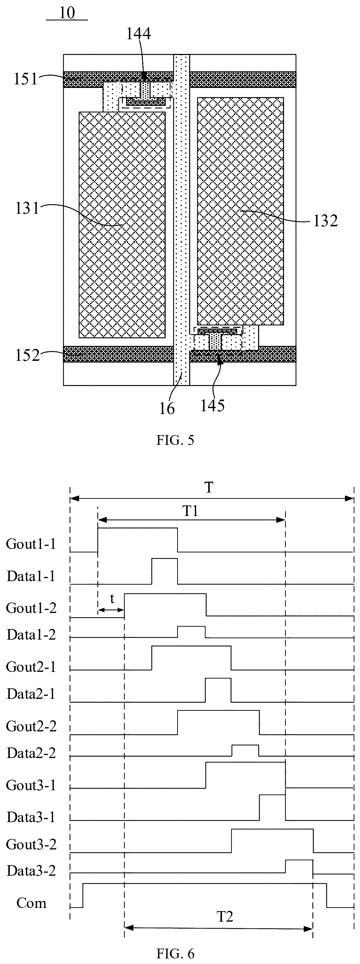

Referring to FIG. 3-5, where FIG. 3 is a structural schematic view of a display module according to Implementation 1 of the present disclosure, FIG. 4 is a structural schematic view of a drive substrate according to Implementation 1 of the present disclosure, and FIG. 5 is another structural schematic view of a drive substrate according to Implementation 1 of the present disclosure. In the embodiments, a display module 100 is provided, which includes pixel units 40, drive transistors 14, scan lines 15, and data lines 16. The pixel units 40 are arranged in an array, each pixel unit 40 includes a pixel electrode 13, a common electrode 22, and a microcapsule structure 30, where the pixel electrode 13 is disposed opposite the common electrode 22, and the microcapsule structure 30 is disposed between the pixel electrode 13 and the common electrode 22. The microcapsule structure 30 includes an electrophoresis medium, and positive-charged particles 31 and negative-charged particles 32 suspended in the electrophoresis medium. The positive-charged particles 31 and the negative-charged particles 32 are charged particles of different colors, and their specific colors may be set according to actual needs, which is not limited herein. In the present embodiments, the positive-charged particles 31 and the negative-charged particles 32 are respectively illustrated as white particles and black particles.

Each drive transistor 14 includes a control end 141, a first end 142, and a second end 143, where the second end 143 is electrically connected to a corresponding pixel electrode 13 for driving the pixel electrode 13, so as to form a corresponding electric field between the pixel electrode 13 and the common electrode 22, thereby enabling the charged particles to move regularly. In particular, each scan line 15 is electrically connected to the control end 141 of a corresponding drive transistor 14, such that the scan line 15 supplies a scanning signal to the pixel unit 40 via the drive transistor 14; each data line 16 is electrically connected to the first end 142 of a corresponding drive transistor 14, such that the data line 16 supplies a data signal to the pixel unit 40 via the drive transistor 14, causing the pixel unit 40 to display a corresponding color. Specifically, the control end 141 is a gate of the drive transistor 14, the first end 142 is a source of the drive transistor 14, and the second end 143 is a drain of the drive transistor 14. The drive transistor 14 may be a thin-film transistor (TFT), and the specific type may be selected according to actual needs, without specific restrictions.

In the embodiments, the pixel unit 40 includes a first pixel unit 41 and a second pixel unit 42. When the display module 100 displays an image, within each display cycle T, the first pixel unit 41 is configured to display a frame of image in a first phase T1, and the second pixel unit 42 is configured to display a next frame of image in a second phase T2, such that the display module 100 can display two frames of image within the display cycle T, which may double the refresh rate of the display module 100, thereby overcoming the problem of a low refresh rate caused by the slow response speed of the display module 100a, and thus effectively improving the refresh rate of the display module 100 and mitigating the "stuck" feeling of the images.

Specifically, in each pixel unit 40, the pixel electrode 13 includes a first pixel electrode 131 and a second pixel electrode 132 that are adjacent to each other; the first pixel electrode 131 forms the first pixel unit 41 with the common electrode 22 and the microcapsule structure 30, and the second pixel electrode 132 forms the second pixel unit 42 with the same common electrode 22 and the microcapsule structure 30. The drive transistors 14 include a first transistor 144 and a second transistor 145, the second end 143 of the first transistor 144 is electrically connected to the first pixel electrode 131, and the second end 143 of the second transistor 145 is electrically connected to the second pixel electrode 132. The data line 16 is arranged between the first pixel unit 41 and the second pixel unit 42 to shorten the wiring length between the data line 16 and the first pixel unit 41 and/or the second pixel unit 42, to facilitate the wiring layout; the first end 142 of the first transistor 144 and the first end 142 of the second transistor 145 are respectively electrically connected to the data line 16 to enable the data line 16 to provide data signals to the first pixel unit 41 and the second pixel unit 42, respectively.

Specifically, the scan lines 15 include a first scan line 151 and a second scan line 152, the first scan line 151 being electrically connected to the control end 141 of the first transistor 144 for controlling the time when the first pixel unit 41 can receive the data signal, and the second scan line 152 being electrically connected to the control end 141 of the second transistor 145 for controlling the time when the second pixel unit 42 can receive the data signal. Specifically, as shown in FIGS. 4 and 5, the first scan line 151 and the second scan line 152 may be arranged on the same side of the pixel unit 40, or arranged on opposite sides of the pixel unit 40, as required.

Referring to FIG. 6, FIG. 6 is a timing diagram of a drive signal of a display module according to Implementation 1 of the present disclosure. In the embodiments, a driving method for a display module is provided. Taking the pixel unit 40 with three rows and three columns as an example, in each display cycle T, in the first phase T1, each first scan line 151 pushes scanning signals Goutl-1, Gout2-1, Gout3-1 corresponding to a frame row by row to turn on the first transistor 144 row by row. At the same time, each data line 16 pushes data signals Data1-1, Data2-1, Data3-1 corresponding to the frame to the first pixel unit 41 row by row during the first phase T1, such that the first pixel unit 41 displays a frame of image; after the first scan line 151 has pushed for a period of time t, the second phase T2 is entered, and each second scan line 152 pushes the scanning signals Goutl-2, Gout2-2, Gout3-2 corresponding to a next frame row by row, such that the second transistor 145 is turned on row by row. At the same time, each data line 16 pushes the data signals Datal-2, Data2-2, Data3-3 corresponding to the next frame to the second pixel unit 42 row by row during the second phase T2, such that the second pixel unit 42 displays a next frame of image.

The above driving method enables the display module 100 to push image signals corresponding to two frames in one display cycle T. Compared with the refresh rate f of the conventional electrophoretic display module 100a, the structure of the display module 100 may increase the image refresh rate to twice the conventional refresh rate f, thereby greatly increasing the image refresh rate and thus effectively mitigating the "stuck" feeling of the images in the display module 100a. In the embodiments, in each display cycle T, the time difference t between the first phase T1 and the second phase T2 may be set according to actual needs.

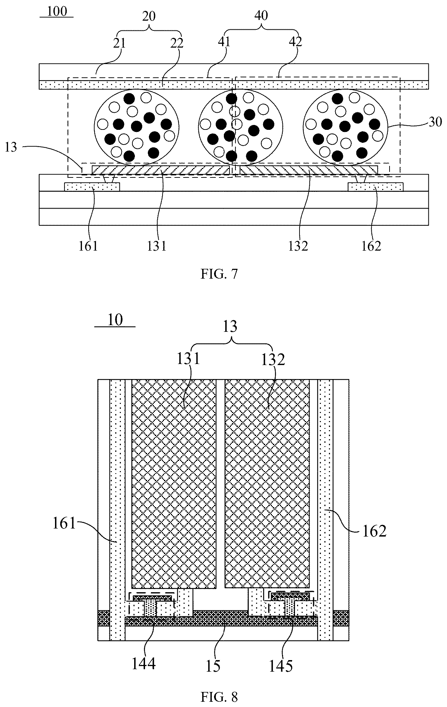

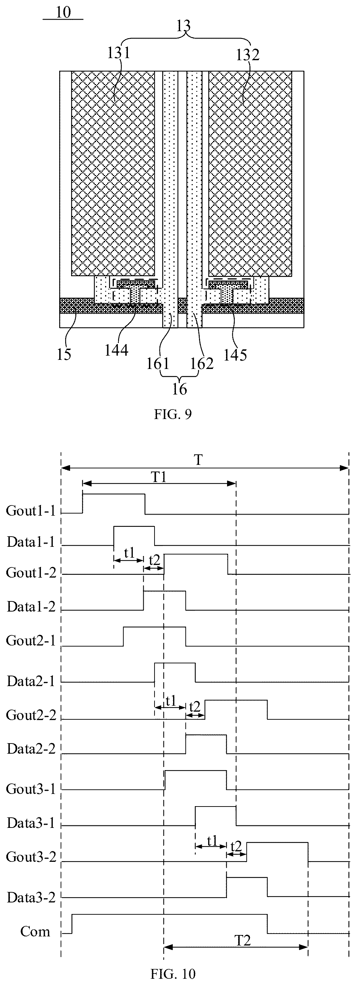

Referring to FIGS. 7-9, FIG. 7 is a structural schematic view of a display module according to Implementation 2 of the present disclosure, FIG. 8 is a structural schematic view of a drive substrate according to Implementation 2 of the present disclosure, and FIG. 9 is another structural schematic view of a drive substrate according to Implementation 2 of the present disclosure. Different from the Implementation 1, in the present embodiments, in the same row of pixel units 40, the control end 141 of the first transistor 144 and the control end 141 of the second transistor 145 are respectively electrically connected to the corresponding same scan line 15, so as to control the time when the row of pixel units 40 can receive data signals. That is, a row of pixel units 40 is driven via a single scan line 15. Specifically, the data lines 16 include a first data line 161 and a second data line 162, the first data line 161 being electrically connected to the first end 142 of the first transistor 144 for supplying a data signal to the first pixel unit 41, and the second data line 162 being electrically connected to the first end 142 of the second transistor 145 for supplying a data signal to the second pixel unit 42. As shown in FIGS. 8 and 9, in the present embodiments, in each pixel unit 40, the first data line 161 and the second data line 162 may be arranged on opposite sides of the pixel unit 40, or between the first pixel unit 41 and the second pixel unit 42; or, the first data line 161 may be arranged outside the first pixel unit 41, the second scan line 152 may be arranged between the first pixel unit 41 and the second pixel unit 42; or, the first data line 161 may be arranged between the first pixel unit 41 and the second pixel unit 42, and the second data line 162 may be arranged outside the second pixel unit 42; the specific arrangements may be made according to actual needs, and there are no specific restrictions.

Specifically, during each display cycle T, in the first phase T1, the scan line 15 is configured to push a scanning signal to the first transistor 144, and the first data line 161 is configured to push a data signal corresponding to a frame to the first pixel unit 41 via the first transistor 144; in the second phase T2, the scan line 15 is configured to push a scanning signal to the second transistor 145, and the second data line 162 is configured to push a data signal corresponding to a next frame to the second pixel unit 42 via the second transistor 145.

Referring to FIG. 10, FIG. 10 is a timing diagram of a drive signal of a display module according to Implementation 2 of the present disclosure. Specifically, still taking the pixel unit 40 with three rows and three columns as an example, during each display cycle T, in the first phase T1, each scan line 15 pushes scanning signals Goutl-1, Gout2-1, Gout3-1 corresponding to a frame row by row, such that the drive transistor 14 is turned on row by row. At the same time, in this phase, the first data line 161 pushes data signals Data1-1, Data2-1, Data3-1 corresponding to the frame to the first pixel unit 41 column by column, such that the first pixel unit 41 displays the frame of image; after the first data line 161 has pushed for a period of time t1, the second data line 162 pushes data signals Datal-2, Data2-2, Data3-2 corresponding to a next frame to the second pixel unit 42 in advance. At this time, since the scanning signal corresponding to the next frame has not yet been pushed by the scan line 15, the second pixel unit 42 does not display the next frame of image; after the second data line 162 has pushed for a period of time t2, the second phase T2 is entered, and the scan line 15 pushes scanning signals corresponding to the next frame row by row, and the second pixel unit 42 receives the data signals Datal-2, Data2-2, Data3-2 corresponding to the next frame pushed by the second data line 162, such that the second pixel unit 42 displays the next frame of image.

The above driving method enables the display module 100 to push image signals corresponding to two frames in one display cycle T. Compared with the refresh rate f of the conventional electrophoretic display module 100a, the structure of the display module 100 may increase the image refresh rate to twice the conventional refresh rate f, thereby greatly increasing the image refresh rate and thus effectively mitigating the "stuck" feeling of the images in the display module 100a. In the embodiments, in each display cycle T, the time difference (t1+t2) between the first stage T1 and the second stage T2 may be set according to actual needs.

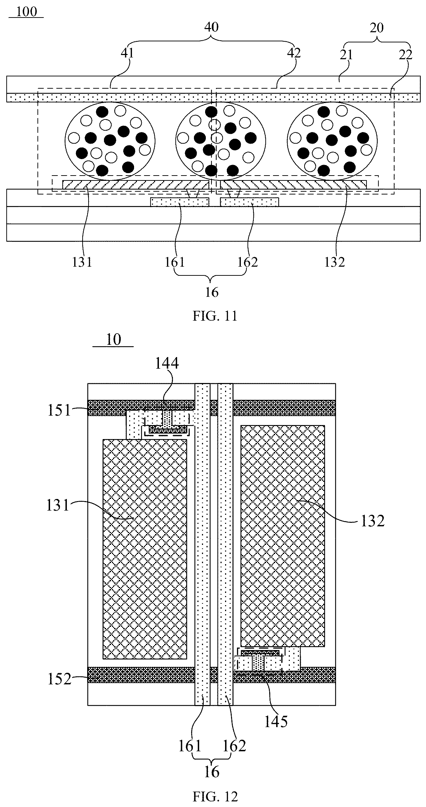

Referring to FIGS. 11-12, FIG. 11 is a structural schematic view of a display module according to Implementation 3 of the present disclosure, and FIG. 12 is a structural schematic view of a drive substrate according to Implementation 3 of the present disclosure. Different from the Implementations 1 and 2, in the present embodiments, the scan lines 15 include a first scan line 151 and a second scan line 152, the first scan line 151 being electrically connected to the control end 141 of the first transistor 144, the second scan line 152 being electrically connected to the control end 141 of the second transistor 145; the data lines 16 include a first data line 161 and a second data line 162, the first data line 161 being electrically connected to the first end 142 of the first transistor 144, and the second data line 162 being electrically connected to the first end 142 of the second transistor 145. In particular, the first scan line 151 and the second scan line 152 are configured in the same or similar manner as those described in the Implementation 1 above, and may achieve the same technical effect. The first data line 161 and the second data line 162 are configured in the same or similar manner as those described in the Implementation 2 above, and may achieve the same technical effect. For details, reference may be made to the above description, which will not be repeated here.

Specifically, in each display cycle T, in the first phase T1, the first scan line 151 is configured to push a scanning signal to the first transistor 144, the first data line 161 is configured to push a data signal corresponding to a frame to the first pixel unit 41 via the first transistor 144; and in the second phase T2, the second scan line 152 is configured to push a scanning signal to the second transistor 145, and the second data line 162 is configured to a data signal corresponding to a next frame to the second pixel unit 42 via the second transistor 145.

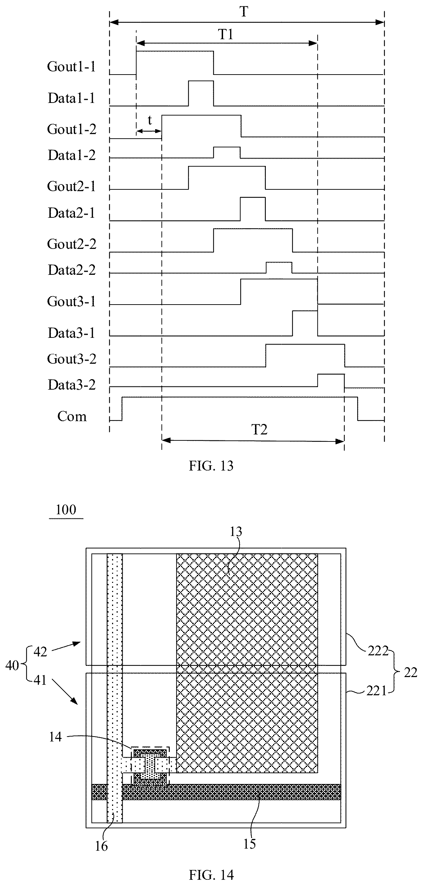

Referring to FIG. 13, FIG. 13 is a timing diagram of a drive signal of a display module according to Implementation 3 of the present disclosure. Specifically, still taking the pixel unit 40 with three rows and three columns as an example, during each display cycle T, in the first phase T1, the first scan line 151 pushes scanning signals Goutl-1, Gout2-1, Gout3-1 corresponding to a frame row by row, such that the first transistor 144 is turned on row by row. At the same time, in this phase, the first data line 161 pushes data signals Datal-1, Data2-1, Data3-1 corresponding to the frame to the first pixel unit 41 column by column, such that the first pixel unit 41 displays the frame of image; after the first scan line 151 has been pushed for a period of time t, the second phase T2 is entered, and the second scan line 152 pushes scanning signals Goutl-2, Gout2-2, and Gout3-2 corresponding to a next frame row by row, such that the second transistor 145 is turned on row by row. In this phase, the second data line 16 pushes data signals Datal-2, Data2-2, and Data3-2 corresponding to the next frame to the second pixel unit 42 column by column, such that the second pixel unit 42 displays the next frame of image.

The above driving method enables the display module 100 to push image signals corresponding to two frames in one display cycle T. Compared with the refresh rate f of the conventional electrophoretic display module 100a, the structure of the display module 100 may increase the image refresh rate to twice the conventional refresh rate f, thereby greatly increasing the image refresh rate and thus effectively mitigating the "stuck" feeling of the images in the display module 100a. In the embodiments, in each display cycle T, the time difference t between the first stage T1 and the second stage T2 may be set according to actual needs.

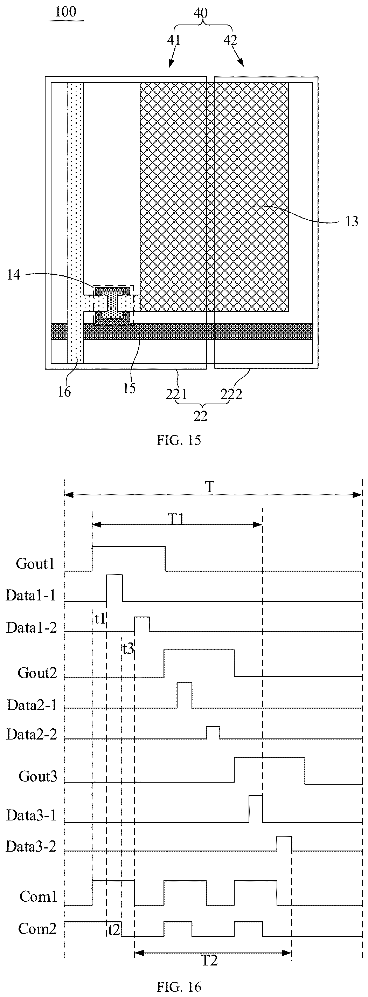

Referring to FIGS. 14-15, FIG. 14 is a planar structural schematic view of a display module according to Implementation 4 of the present disclosure, and FIG. 15 is another planar structural schematic view of a display module according to Implementation 4 of the present disclosure. In the present embodiments, the common electrode 22 includes a first common electrode 221 and a second common electrode 222 that are adjacent to each other. The first common electrode 221 and the second common electrode 222 may be arranged in a direction parallel to the scan line 15, or they may be arranged in a direction parallel to the data line 16, which may be set according to actual needs. The pixel electrode 13 forms the first pixel unit 41 with the first common electrode 221 and the microcapsule structure 30, and the same pixel electrode 13 forms the second pixel unit 42 with the second common electrode 222 and the microcapsule structure 30. That is, in this pixel unit 40, the first pixel unit 41 and the second pixel unit 42 share the pixel electrode 13; a portion of the pixel electrode 13 facing the first common electrode 221, together with the first common electrode 221 and the microcapsule structure 30 between the pixel electrode 13 and the first common electrode 221, forms the first pixel unit 41, and a portion of the pixel electrode 13 facing the second common electrode 222, together with the second common electrode 222 and the microcapsule structure 30 between the pixel electrode 13 and the second common electrode 222, forms the second pixel unit 42.

Specifically, within each display cycle T, the scan line 15 pushes a scanning signal to the drive transistor 14 in the first phase T1 and the second phase T2; in the first phase T1, the data line 16 pushes a data signal corresponding to a frame to the pixel electrode 13 via the first end 142, the first common electrode 221 is configured to push a first common voltage signal Com1 such that the first pixel unit 41 receives the data signal corresponding to the frame; in the second phase T2, the data line 16 pushes a data signal corresponding to a next frame to the pixel electrode 13 via the first end 142, and the second common electrode 222 is configured to push a second common voltage signal Com2 such that the second pixel unit 42 receives the data signal corresponding to the next frame.

Referring to FIG. 16, FIG. 16 is a timing diagram of a drive signal of a display module according to Implementation 4 of the present disclosure. Specifically, still taking the pixel unit 40 with three rows and three columns as an example, during each display cycle T, the scan line 15 pushes scanning signals Goutl, Gout2, Gout3 corresponding to a frame row by row, and at the same time, the first common electrode 221 pushes a common voltage signal Com1 corresponding to the frame. After the Com1 signal has been pushed for a period of time t1, the data line 16 pushes data signals Datal-1, Data2-1, Data3-1 corresponding to the frame to the pixel electrodes 13 column by column, such that a corresponding electric field is formed in the first pixel unit 41, i.e., the data line 16 pushes the data signals Data1-1, Data2-1, Data3-1 to the first pixel unit 41 column by column such that the first pixel unit 41 displays the frame of image. After the data line 16 has pushed the data signals for a period of time t2, the second common electrode 222 pushes a common voltage signal Com2 corresponding to the next frame. At this time, the data line 16 has not pushed data signals corresponding to the next frame, so a corresponding electric field has not yet been formed in the second pixel unit 42, and the next frame of image is not displayed. After the common voltage signal Com2 has been pushed for a period of time t3, the second phase T2 is entered, and the data line 16 pushes data signals Datal-2, Data2-2, and Data3-2 corresponding to the next frame to the pixel electrode 13 column by column, such that the corresponding electric field is formed in the second pixel unit 42, i.e., the data line 16 pushes the data signals Datal-2, Data2-2, and Data3-2 to the second pixel unit 42 column by column, such that the second pixel unit 42 displays the next frame of image.

The above driving method enables the display module 100 to push image signals corresponding to two frames in one display cycle T. Compared with the refresh rate f of the conventional electrophoretic display module 100a, the structure of the display module 100 may increase the image refresh rate to twice the conventional refresh rate f, thereby greatly increasing the image refresh rate and thus effectively mitigating the "stuck" feeling of the images in the display module 100a. In the embodiments, in each display cycle T, the time difference (t1+t2+t3) between the first stage T1 and the second stage T2 may be set according to actual needs.

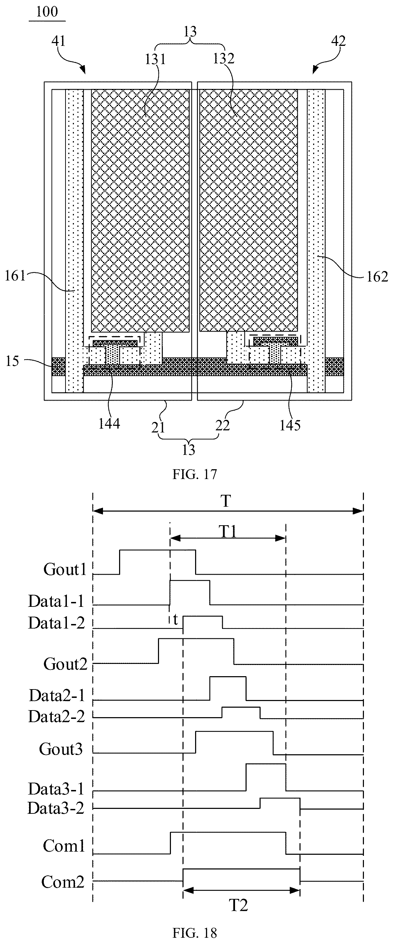

Referring to FIG. 17, FIG. 17 is a planar structural schematic view of a display module according to Implementation 5 of the present disclosure. In the present embodiments, the pixel electrode 13 includes an adjacent first pixel electrode 131 and a second pixel electrode 132, and the common electrodes 22 include a first common electrode 221 and a second common electrode 222 that are adjacent to each other; the first pixel electrode 131 is disposed facing the first common electrode 221 and forms the first pixel unit 41 together with the microcapsule structure 30; the second pixel electrode 132 is disposed facing the second common electrode 222 and forms the second pixel unit 42 together with the microcapsule structure 30; the drive transistors 14 include a first transistor 144 and a second transistor 145, the second end 143 of the first transistor 144 being electrically connected to the first pixel electrode 131, and the second end 143 of the second transistor 145 being electrically connected to the second pixel electrode 132. The control end 141 of the first transistor 144 and the control end 141 of the second transistor 145 are each electrically connected to the same scan line 15; the data lines 16 include a first data line 161 and a second data line 162, the first data line 161 being electrically connected to the first end 142 of the first transistor 144, and the second data line 162 being electrically connected to the first end 142 of the second transistor 145. Specifically, the first data line 161 and the second data line 162 may be arranged in the same or similar manner as the first data line 161 and the second data line 162 involved in the Implementation 2 above, and may achieve the same technical effect; the first common electrode 221 and the second common electrode 222 may be arranged in the same or similar manner as the first common electrode 221 and the second common electrode 222 involved in the Implementation 4 above, and may achieve the same technical effect. The above details may refer to the above specific introduction, which will not be repeated here.

Specifically, during each display cycle T, the scan line 15 is configured to push a scanning signal to the drive transistor 14 in the first stage T1 and the second stage T2; in the first stage T1, the first data line 161 is configured to push a data signal corresponding to a frame to the first pixel electrode 131 via the first transistor 144, the first common electrode 221 is configured to push a first common voltage signal, such that the first pixel unit 41 receives the data signal corresponding to the frame; in the second phase T2, the second data line 162 is configured to push a data signal corresponding to a next frame to the second pixel electrode 132 via the second transistor 145, and the second common electrode 222 is configured to push a second common voltage signal, such that the second pixel unit 42 receives the data signal corresponding to the next frame.

Referring to FIG. 18, FIG. 18 is a timing diagram of a drive signal of a display module according to Implementation 5 of the present disclosure. Specifically, still taking the pixel unit 40 with three rows and three columns as an example, during each display cycle T, the scan line 15 pushes Goutl, Gout2, and Gout3 row by row to turn on the drive transistor 14 row by row. In the first phase T1, the first common electrode 221 pushes a first common voltage signal Com1, and at the same time, the first data line 161 pushes data signals Datal-1, Data2-1, Data3-1 corresponding to the frame to the first pixel unit 41 column by column, such that the first pixel unit 41 displays the frame of image. After the first data line 161 has pushed the data signals for a period of time t, the second phase T2 is entered, the second common electrode 222 pushes a second common voltage signal Com2, and at the same time, the second data line 162 pushes data signals Data1-2, Data2-2, Data3-2 corresponding to a next frame to the second pixel unit 42 to cause the second pixel unit 42 to display the next frame of image.

The above driving method enables the display module 100 to push image signals corresponding to two frames in one display cycle T. Compared with the refresh rate f of the conventional electrophoretic display module 100a, the structure of the display module 100 may increase the image refresh rate to twice the conventional refresh rate f, thereby greatly increasing the image refresh rate and thus effectively mitigating the "stuck" feeling of the images in the display module 100a. In the embodiments, in each display cycle T, the time difference t between the first stage T1 and the second stage T2 may be set according to actual needs.

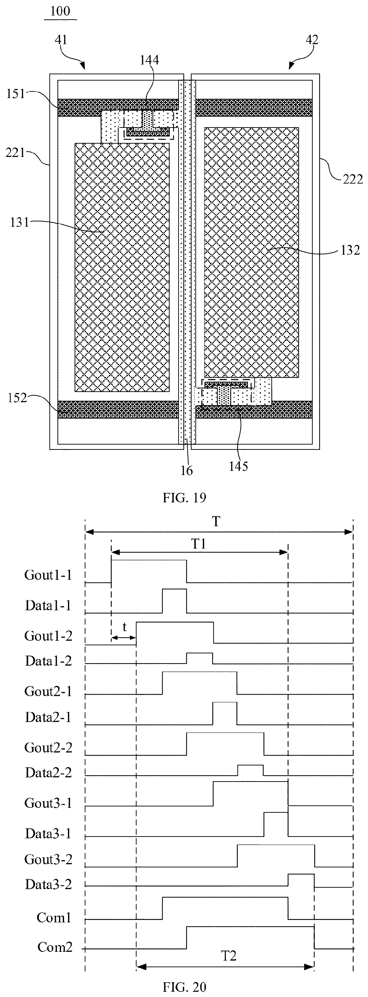

Referring to FIG. 19, FIG. 19 is a planar structural schematic view of a display module according to some embodiments of the present disclosure. Different from the Implementation 5, in the present embodiments, the first end 142 of the first transistor 144 and the first end 142 of the second transistor 145 are respectively electrically connected to the same data line 16; the scan lines 15 include a first scan line 151 and a second scan line 152, the first scan line 151 being electrically connected to the control end 141 of the first transistor 144, and the second scan line 152 being electrically connected to the control end 141 of the second transistor 145. That is, in the embodiments, the first pixel unit 41 and the second pixel unit 42 are each electrically connected to the same data line 16, and the first pixel unit 41 and the second pixel unit 42 are each electrically connected to the first scan line 151 and the second scan line 152, respectively. The first scan line 151 and the second scan line 152 may be arranged in the same or similar manner as the first scan line 151 and the second scan line 152 involved in the Implementation 1 above, and may achieve the same technical effect; the first common electrode 221 and the second common electrode 222 may be arranged in the same or similar manner as the first common electrode 221 and the second common electrode 222 involved in the Implementation 4 above, and may achieve the same technical effect. The above details may refer to the above details, which will not be repeated here.

Specifically, during each display cycle T, in the first phase T1, the first scan line 151 is configured to push a scanning signal to the first transistor 144, the data line 16 is configured to push a data signal corresponding to a frame to the first pixel electrode 131 via the first transistor 144, the first common electrode 221 is configured to push a first common voltage signal, such that the first pixel unit 41 receives the data signal corresponding to the frame; in the second phase T2, the second scan line 152 is configured to push a data signal corresponding to a next frame to the second pixel electrode 132 via the second transistor 145, and the second common electrode 222 is configured to push a second common voltage signal, such that the second pixel unit 42 receives the data signal corresponding to the next frame.

Referring to FIG. 20, FIG. 20 is a timing diagram of a drive signal of a display module according to some embodiments of the present disclosure. Specifically, still taking the pixel unit 40 with three rows and three columns as an example, during each display cycle T, in the first phase T1, the first scan line 151 pushes scanning signals Gout1-1, Gout2-1, Gout3-1 corresponding to a frame row by row, such that the first transistor 144 is turned on row by row. At the same time, in this phase, the first common electrode 221 pushes a first common voltage signal Com1, and the data line 16 pushes data signals Datal-1, Data2-1, Data3-1 corresponding to the frame to the first pixel unit 41, such that the first pixel unit 41 displays the frame of image. After the first scan line 151 has pushed for a period of time t, the second phase T2 is entered, and the second scan line 152 pushes scanning signals Goutl-2, Gout2-2, and Gout3-2 corresponding to a next frame row by row, such that the second transistor 145 is turned on row by row. At the same time, in this phase, the second common electrode 222 pushes a second common voltage signal Com2, and the second data line 162 pushes data signals Datal-2, Data2-2, Data3-3 corresponding to the next frame to the second pixel unit 42 column by column, such that the second pixel unit 42 displays the next frame of image.

The above driving method enables the display module 100 to push image signals corresponding to two frames in one display cycle T. Compared with the refresh rate f of the conventional electrophoretic display module 100a, the structure of the display module 100 may increase the image refresh rate to twice the conventional refresh rate f, thereby greatly increasing the image refresh rate and thus effectively mitigating the "stuck" feeling of the images in the display module 100a. In the embodiments, in each display cycle T, the time difference t between the first stage T1 and the second stage T2 may be set according to actual needs.

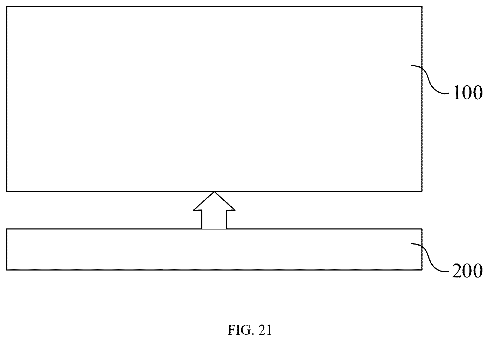

Referring to FIG. 21, FIG. 21 is a structural schematic view of a display device according to some embodiments of the present disclosure. In the present embodiments, a display device is provided, which includes a display module 100 and a control module 200.

The display module 100 is configured to display images, and the specific structure and function of the display module 100 are the same as or similar to those of the display module 100 involved in the above embodiments, such that the same technical effects may be achieved. For details, reference may be made to the above description, which will not be repeated herein.

In particular, the control module 200 is electrically connected to the display module 100 and is configured to provide the display module 100 with control signals, such as clock control signals, power control signals, gate drive signals, source drive signals, and other control signals required by the display module 100, such that during each display cycle, the display module 100 displays one frame of image in the first stage T1 and displays a next frame of image in the second stage T2, thereby enabling the display module 100 to display two frames of images in one display cycle T by partitioning control of the pixel unit 40, and thus greatly improving the refresh rate of the display device and effectively mitigating the "stuck" feeling when displaying images on the display device.

In some embodiments, the display device may further include a backlight module, which is disposed opposite the display module 100, for providing a backlight source to the display module 100. When the ambient light is dark, the backlight module is turned on to provide a light source to the display module 100, such that the display device is appliable in multiple scenarios. Further, the backlight intensity is adjustable in different light environments to supplement the light of the display module 100, such that the display device may always maintain the best display effect, thereby improving the user's comfort.

The above is only some embodiments of the present disclosure, and does not thereby limit the scope of the present disclosure. Any equivalent structure or equivalent process transformation using the content of the description and drawings of the present disclosure, or direct or indirect use in other related technical fields, shall likewise be included in the scope of the present disclosure.

## Claims

1. A display module, comprising:
pixel units; wherein each pixel unit comprises a pixel electrode, a common electrode, and a microcapsule structure; the pixel electrode is disposed opposite the common electrode, and the microcapsule structure is disposed between the pixel electrode and the common electrode; the microcapsule structure comprises charged particles;
drive transistors; wherein each drive transistor comprises a control end, a first end, and a second end; the second end is electrically connected to a corresponding pixel electrode for driving the corresponding pixel electrode;
scan lines; wherein each scan line is electrically connected to the control end of a corresponding drive transistor, for supplying a scanning signal to a corresponding pixel unit; and
data lines; wherein each data line is electrically connected to the first end of a corresponding drive transistor, for supplying a data signal to a corresponding pixel unit;
wherein each pixel unit comprises a first pixel unit and a second pixel unit that are adjacent to each other;
within each display cycle:
in a first phase, the first pixel unit is configured to receive the data signal corresponding to a frame pushed by a corresponding data line;
in a second phase, the second pixel unit is configured to receive the data signal corresponding to a next frame pushed by a corresponding data line; the first phase is prior to the second phase.

2. The display module according to claim 1, wherein the pixel units are arranged in an array;
within the display cycle:
in the first phase, the drive transistors, corresponding to the first pixel units of the pixel units in multiple rows, are turned on sequentially, and the first pixel units in the multiple rows are caused to receive the data signals corresponding to the frame pushed by corresponding data lines to display an image corresponding to the frame;
in the second phase, the drive transistors, corresponding to the second pixel units of the pixel units in the multiple rows, are turned on sequentially, and the second pixel units in the multiple rows are caused to receive the data signals corresponding to the next frame pushed by corresponding data lines to display another image corresponding to the next frame.

3. The display module according to claim 2, wherein for each pixel unit:
in the pixel unit, the pixel electrode comprises a first pixel electrode and a second pixel electrode that are adjacent to each other; the first pixel electrode forms the first pixel unit with the common electrode and the microcapsule structure, and the second pixel electrode forms the second pixel unit with the common electrode and the microcapsule structure;
the drive transistors comprise a first transistor and a second transistor corresponding to the pixel unit, the second end of the first transistor being electrically connected to the first pixel electrode, and the second end of the second transistor being electrically connected to the second pixel electrode.

4. The display module according to claim 3, wherein the first end of the first transistor and the first end of the second transistor are each electrically connected to a same corresponding data line;
the scan lines comprise a first scan line and a second scan line corresponding to the pixel unit, the first scan line being electrically connected to the control end of the first transistor, the second scan line being electrically connected to the control end of the second transistor;
within the display cycle:
in the first phase, the first scan line is configured to push the scanning signal to the first transistor, and the first pixel unit is configured to receive the data signal corresponding to the frame pushed by the same corresponding data line;
in the second phase, the second scan line is configured to push the scanning signal to the second transistor, and the second pixel unit is configured to receive the data signal corresponding to the next frame pushed by the same corresponding data line.

5. The display module according to claim 4, wherein within the display cycle:
in the first phase, the first scan lines corresponding to the pixel units are configured to push the scanning signals corresponding to the frame row by row, and the first transistors corresponding to the pixel units are caused to be turned on row by row; the data lines are configured to push the data signals corresponding to the frame to the first pixel units of the pixel units column by column, for displaying an image corresponding to the frame;
in the second phase, the second scan lines corresponding to the pixel units are configured to push the scanning signals corresponding to the next frame row by row, and the second transistors corresponding to the pixel units are caused to be turned on row by row; the data lines are configured to push the data signals corresponding to the next frame to the second pixel units of the pixel units column by column, for displaying another image corresponding to the next frame.

6. The display module according to claim 5, wherein after the first phase ends, the second phase is entered after a preset period of time.

7. The display module according to claim 3, wherein the control end of the first transistor and the control end of the second transistor are each electrically connected to a same corresponding scan line;
the data lines comprise a first data line and a second data line corresponding to the pixel unit, the first data line being electrically connected to the first end of the first transistor, and the second data line being electrically connected to the first end of the second transistor;
within the display cycle:
in the first phase, the same corresponding scan line is configured to push the scanning signal to the first transistor, and the first data line is configured to push the data signal corresponding to the frame to the first pixel unit via the first transistor;
in the second phase, the same corresponding scan line is configured to push the scanning signal to the second transistor, and the second data line is configured to push the data signal corresponding to the next frame to the second pixel unit via the second transistor.

8. The display module according to claim 7, wherein within the display cycle:
in the first phase, the scan lines are configured to push the scanning signals corresponding to the frame row by row, and the drive transistors are caused to be turned on row by row; the first data lines corresponding to the pixel units are configured to push the data signals corresponding to the frame to the first pixel units of the pixel units column by column, for displaying an image corresponding to the frame; after each of the first data lines has pushed for a period of time, a corresponding second data line is configured to push the data signal corresponding to the next frame to a corresponding second pixel unit in advance;
in the second phase, the scan lines are configured to push the scanning signals corresponding to the next frame row by row, and the second pixel units of the pixel units are configured to receive the data signals corresponding to the next frame, for displaying another image corresponding to the next frame.

9. The display module according to claim 3, wherein the scan lines comprise a first scan line and a second scan line corresponding to the pixel unit, the first scan line being electrically connected to the control end of the first transistor, the second scan line being electrically connected to the control end of the second transistor;
the data lines comprise a first data line and a second data line corresponding to the pixel unit, the first data line being electrically connected to the first end of the first transistor, and the second data line being electrically connected to the first end of the second transistor;
within the display cycle:
in the first phase, the first scan line is configured to push the scanning signal to the first transistor, and the first data line is configured to push the data signal corresponding to the frame to the first pixel unit via the first transistor;
in the second phase, the second scan line is configured to push the scanning signal to the second transistor, and the second data line is configured to push the data signal corresponding to the next frame to the second pixel unit via the second transistor.

10. The display module according to claim 9, wherein within the display cycle:
in the first phase, the first scan lines corresponding to the pixel units are configured to push the scanning signals corresponding to the frame row by row, and the first transistors corresponding to the pixel units are caused to be turned on row by row; the first data lines corresponding to the pixel units are configured to push the data signals corresponding to the frame to the first pixel units of the pixel units column by column, for displaying an image corresponding to the frame;
in the second phase, the second scan lines corresponding to the pixel units are configured to push the scanning signals corresponding to the next frame row by row, and the second transistors corresponding to the pixel units are caused to be turned on row by row; the second data lines corresponding to the pixel units are configured to push the data signals corresponding to the next frame to the second pixel units of the pixel units column by column, for displaying another image corresponding to the next frame.

11. The display module according to claim 2, where the common electrode comprises a first common electrode and a second common electrode that are adjacent to each other; the pixel electrode forms the first pixel unit with the first common electrode and the microcapsule structure, and the pixel electrode forms the second pixel unit with the second common electrode and the microcapsule structure;
for each pixel unit, within the display cycle, a corresponding scan line is configured to push the scanning signal to the drive transistors corresponding to the first pixel units in the first phase and the second phase;
in the first phase, a corresponding data line is configured to push the data signal corresponding to the frame to the pixel electrode via the first end, the first common electrode is configured to push a first common voltage signal, and the first pixel unit is caused to receive the data signal corresponding to the frame;
in the second phase, the corresponding data line is configured to push the data signal corresponding to the next frame to the pixel electrode via the first end, the second common electrode is configured to push a second common voltage signal, and the second pixel unit is caused to receive the data signal corresponding to the next frame.

12. The display module according to claim 11, wherein for the pixel units, within the display cycle, the scan lines are configured to push the scanning signals row by row, and the drive transistors are caused to be turned on row by row;
in the first phase, the first common electrodes of the pixel units are configured to push the common voltage signals corresponding to the frame; the data lines are configured to push the data signals corresponding to the frame to the pixel electrodes of the pixel units column by column, such that a corresponding electric field is formed in each of the first pixel units of the pixel units, for displaying an image corresponding to the frame;
after the data lines have pushed the data signals corresponding to the frame for a period of time, the second common electrodes of the pixel units are configured to push the common voltage signals corresponding to the next frame; after another period of time, the second phase is entered;
in the second phase, the data lines are configured to push the data signals corresponding to the next frame to the pixel electrodes of the pixel units column by column, such that a corresponding electric field is formed in each of the second pixel units of the pixel units, for displaying another image corresponding to the next frame.

13. The display module according to claim 2, wherein for each pixel unit:
in the pixel unit, the pixel electrode comprises a first pixel electrode and a second pixel electrode that are adjacent to each other; the common electrode (22) comprises a first common electrode and a second common electrode that are adjacent to each other; the first pixel electrode is disposed facing the first common electrode and forms the first pixel unit together with the microcapsule structure; the second pixel electrode is disposed facing the second common electrode and forms the second pixel unit together with the microcapsule structure;
the drive transistors comprise a first transistor and a second transistor corresponding to the pixel unit, the second end of the first transistor being electrically connected to the first pixel electrode, and the second end of the second transistor being electrically connected to the second pixel electrode.

14. The display module according to claim 13, wherein the control end of the first transistor and the control end of the second transistor are each electrically connected to a same corresponding scan line;
the data lines comprise a first data line and a second data line corresponding to the pixel unit, the first data line being electrically connected to the first end of the first transistor, and the second data line being electrically connected to the first end of the second transistor;
within the display cycle, the same corresponding scan line is configured to push the scanning signal to the drive transistor in the first phase and the second phase;
in the first phase, the first data line is configured to push the data signal corresponding to the frame to the first pixel electrode via the first transistor, the first common electrode is configured to push a first common voltage signal, and the first pixel unit is caused to receive the data signal corresponding to the frame;
in the second phase, the second data line is configured to push the data signal corresponding to the next frame to the second pixel electrode via the second transistor, the second common electrode is configured to push a second common voltage signal, and the second pixel unit is caused to receive the data signal corresponding to the next frame.

15. The display module according to claim 14, wherein for the pixel units, within the display cycle, the scan lines are configured to push the scanning signals row by row, and the drive transistors are caused to be turned on row by row;
in the first phase, the first common electrodes of the pixel units are configured to push the first common voltage signals; the first data lines corresponding to the pixel units are configured to push the data signals corresponding to the frame to the first pixel units of the pixel units column by column, for displaying an image corresponding to the frame;
in the second phase, the second common electrodes of the pixel units are configured to push the second common voltage signals; the second data lines corresponding to the pixel units are configured to push the data signals corresponding to the next frame to the second pixel units of the pixel units column by column, for displaying another image corresponding to the next frame.

16. The display module according to claim 13, wherein the first end of the first transistor and the first end of the second transistor are each electrically connected to a same corresponding data line;
the scan lines comprise a first scan line and a second scan line corresponding to the pixel unit, the first scan line being electrically connected to the control end of the first transistor, the second scan line being electrically connected to the control end of the second transistor;
within the display cycle:
in the first phase, the first scan line is configured to push the scanning signal to the first transistor, the same corresponding data line is configured to push the data signal corresponding to the frame to the first pixel electrode via the first transistor, the first common electrode is configured to push a first common voltage signal, and the first pixel unit is caused to receive the data signal corresponding to the frame;
in the second phase, the second scan line is configured to push the data signal corresponding to the next frame to the second pixel electrode via the second transistor, the second common electrode is configured to push a second common voltage signal, and the second pixel unit is caused to receive the data signal corresponding to the next frame.

17. The display module according to claim 16, wherein for the pixel units, within the display cycle:
in the first phase, the first scan lines corresponding to the pixel units are configured to push the scanning signals corresponding to the frame row by row, and the first transistors corresponding to the pixel units are caused to be turned on row by row; the first common electrodes of the pixel units are configured to push the first common voltage signals; the data lines are configured to push the data signals corresponding to the frame to the first pixel units of the pixel units column by column, for displaying an image corresponding to the frame;
in the second phase, the second scan lines corresponding to the pixel units are configured to push the scanning signals corresponding to the next frame row by row, and the second transistors corresponding to the pixel units are caused to be turned on row by row; the second common electrodes of the pixel units are configured to push the second common voltage signals; the data lines are configured to push the data signals corresponding to the next frame to the second pixel units of the pixel units column by column, for displaying another image corresponding to the next frame.

18. The display module according to claim 1, wherein the microcapsule structure comprises an electrophoresis medium, and positive-charged particles and negative-charged particles suspended in the electrophoresis medium; the positive-charged particles and the negative-charged particles are the charged particles of different colors.

19. A display device, comprising:
the display module according to claim 1, for displaying images; and
a control module, electrically connected to the display module and configured to provide a control signal to the display module; wherein within the display cycle, the display module is caused to display an image corresponding to the frame in the first phase and display another image corresponding to the next frame in the second phase.
